(19) Europäisches Patentamt
European Patent Office
Office européen des brevets

(11) Veröffentlichungsnummer : **0 134 978**
**B1**

(12) # EUROPÄISCHE PATENTSCHRIFT

(45) Veröffentlichungstag der Patentschrift : **25.03.87**

(51) Int. Cl.⁴ : **C 12 P 19/04**, C 12 P 19/06, C 08 B 37/00

(21) Anmeldenummer : **84107890.0**

(22) Anmeldetag : **06.07.84**

(54) **Isolierung mikrobieller Polysaccharide aus ihren Amin-Addukten.**

(30) Priorität : **13.07.83 DE 3325224**

(43) Veröffentlichungstag der Anmeldung : **27.03.85 Patentblatt 85/13**

(45) Bekanntmachung des Hinweises auf die Patenterteilung : **25.03.87 Patentblatt 87/13**

(84) Benannte Vertragsstaaten : **AT BE CH DE FR GB IT LI LU NL SE**

(56) Entgegenhaltungen :
**EP-A- 0 103 176**
**EP-A- 0 103 177**
**US-A- 3 422 085**

(73) Patentinhaber : **HOECHST AKTIENGESELLSCHAFT**
**Postfach 80 03 20**
**D-6230 Frankfurt am Main 80 (DE)**

(72) Erfinder : **Fischer, Edgar, Dr.**
**Assmannshäuser Weg 8**
**D-6000 Frankfurt am Main 71 (DE)**
Erfinder : **Schlingmann, Merten, Dr.**
**Schneidhainer Strasse 32a**
**D-6240 Königstein/Taunus (DE)**
Erfinder : **Dürsch, Walter, Dr.**
**In der Braubach 4**
**D-6240 Königstein/Taunus (DE)**
Erfinder : **Rothert, Reinhardt**
**Nonnenwaldstrasse 12**
**D-6239 Eppstein/Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 134 978 B1

Jouve, 18, rue St-Denis, 75001 Paris, France

**Beschreibung**

Die Erfindung betrifft ein Verfahren zur Isolierung von mikrobiellen Polysacchariden aus ihren Addukten mit Aminen.

Durch Fermentation hergestellte extrazelluläre mikrobielle Polysaccharide haben aufgrund ihrer hervorragenden Eigenschaften industrielle Anwendung als Verdicker, Gelier- oder Suspendiermittel, Schutzkolloide oder wasserbindende Mittel gefunden. Bedingt durch das Herstellungsverfahren sind diese Produkte recht teuer, wobei die bisher bekannten aufwendigen Isolierverfahren erheblich zu deren hohem Preis beitragen.

Aus der US-PS 3 928 316 ist es bekannt, das anionische Heteropolysaccharid, das durch Fermentation mit Hilfe des Bakteriums Xanthomonas campestris NRRL B-1459 erhalten wurde, als wasserunlösliches Salz eines primären langkettigen Amins aus den angesäuerten verdünnten Fermentationslösungen zu isolieren. Sofern eine Spaltung dieses Salzes beabsichtigt ist, erfolgt sie mit alkoholischen Lösungen von Alkalien, insbesondere Kalilauge, wobei das Kaliumsalz erhalten wird, das aber noch aminhaltig ist.

Diese bekannte Methode zur Aufspaltung der Amin-Addukte verläuft unvollständig und führt zu salzhaltigen Polymeren. Somit werden weitere Reinigungsoperationen erforderlich, die nicht zuletzt wegen der Aufarbeitung der Abwässer aufwendig sind.

Es wurde auch schon ein Verfahren zur Isolierung von mikrobiellen Polysacchariden aus ihren Amin-Addukten durch Behandeln mit alkalischen Mitteln in Gegenwart einwertiger Alkanole mit 1 bis 3 Kohlenstoffatomen vorgeschlagen, das dadurch gekennzeichnet ist, daß als alkalisches Mittel Ammoniak oder ein leichtflüchtiges Amin eingesetzt wird (DE-A-3 230 302).

Demgegenüber betrifft die Erfindung ein Verfahren zur Isolierung von mikrobiellen Polysacchariden aus ihren Addukten mit langkettigen Aminen durch Behandeln mit einwertigen Alkanolen mit 1 bis 3 Kohlenstoffatomen und darin gelösten basischen Derivaten der Alkalimetalle, das dadurch gekennzeichnet ist, daß ein Addukt eines tertiären Amins mit einem langkettigen und zwei kurzkettigen aliphatischen Resten eingesetzt wird.

Im folgenden werden bevorzugte Ausgestaltungen der Erfindung näher erläutert:

Als Ausgangsmaterialien sind solche Addukte bevorzugt, die sich von polyanionischen mikrobiellen Polysacchariden (z. B. Xanthan) und einem tertiären Fettalkylamin (mit zwei kurzkettigen Alkylresten) ableiten. Vorteilhaft werden diese Addukte im feuchten Zustand, beispielsweise als Preßkuchen, eingesetzt, wie sie bei der Isolierung der mikrobiellen Polysaccharide aus den Fermentationslösungen anfallen. Es entfällt so das Trocknen der Addukte, das nicht nur beachtliche Energiemengen erfordert, sondern auch das Löslichkeits- und Quellvermögen der Addukte beeinträchtigen kann. Die Feststoffgehalte der Preßkuchen liegen im allgemeinen bei etwa 10 bis 40 Gew.-%, bevorzugt bei 15 bis 30 Gew.-%. Die geringen Wassermengen, die durch den Einsatz der feuchten Addukte eingebracht werden, stören beim erfindungsgemäßen Verfahren nicht.

Die DE-A-3 230 303 betrifft ein Verfahren zur Abtrennung von mikrobiellen Polysacchariden aus ihren wäßrigen Lösungen durch Fällung im sauren Medium als Addukt mit einem langkettigen Alkylamin, das dadurch gekennzeichnet ist, daß ein Amin der Formel

$$NR^1R^2R^3$$

eingesetzt wird, in der $R^1$ Alkyl mit 10-20 Kohlenstoffatomen und $R^2$ und $R^3$, die gleich oder verschieden sind, Methyl oder Ethyl bedeuten. Die so erhältlichen Addukte stellen bevorzugte Ausgangsmaterialien für das erfindungsgemäße Verfahren dar.

Die Alkanole werden vorteilhaft in Form ihrer handelsüblichen technischen Qualitäten oder Redestillate eingesetzt, wobei auch hierfür gilt, daß die geringen Wassermengen, die diese Produkte enthalten, das erfindungsgemäße Verfahren nicht beeinträchtigen. Größere Wassermengen sind jedoch nicht beeinträchtigen. Größere Wassermengen sind jedoch nicht vorteilhaft, da die freien mikrobiellen Polysaccharide, insbesondere das Xanthan, in Wasser löslich, in den niederen Alkanolen jedoch unlöslich sind. Ein höherer Wassergehalt, im allgemeinen über 30 %, bezogen auf das Gewicht des Alkohols, könnte somit die Aufarbeitung erschweren. Wird deshalb mit dem feuchten Addukt oder mit der Base zu viel Wasser in das System eingebracht, wobei die zulässige Obergrenze vom Polysaccharid, dem Alkohol und dem freigesetzten Amin abhängt, so ist entsprechend mehr Alkohol einzusetzen.

Als Alkanol wird Methanol bevorzugt.

Als basische Derivate der Alkalimetalle, die in den einwertigen Alkanolen mit 1 bis 3 Kohlenstoffatomen löslich sind, kommen in erster Linie die Hydroxide und Alkoholate des Lithiums, Kaliums und insbesondere Natriums in Betracht. Vorteilhaft werden Alkoholate verwendet, die sich von den eingesetzten Alkanolen ableiten. Die Alkoholate werden vorteilhaft als Lösungen in den zugrunde liegenden Alkoholen eingesetzt. Die Hydroxide können in fester Form, als alkoholische Lösung oder vorteilhaft als konzentrierte wäßrige Laugen eingesetzt werden, da hierdurch die Dosierung und die Vermischung erleichtert werden. Besonders bevorzugt ist konzentrierte Natronlauge.

Das Mengenverhältnis von Amin-Addukt, Alkanol und darin löslichem basischem Derivat der Alkalimetalle, im folgenden alkalisches Mittel genannt, kann in weiten Grenzen schwanken. Die Gew.-

Menge an Alkanol beträgt zweckmäßig das 8- bis 80-fache, bevorzugt das 12- bis 40-fache, des Amin-Addukts bzw. das 2- bis 20-fache, bevorzugt das 3- bis 10-fache, bezogen auf feuchten Preßkuchen. Wie vorstehend erwähnt, muß die Alkoholmenge umso höher liegen, je höher der Wassergehalt im System ist.

Für einige Einsatzzwecke der mikrobiellen Polysaccharide ist es unerwünscht, wenn sie in wäßrigen Systemen zu hohe pH-Werte von beispielsweise über 10 aufweisen. Es sollten deshalb zu hohe molare Überschüsse an alkalischem Mittel, bezogen auf das gebundene tertiäre Amin, von vornherein vermieden werden. Andererseits sind gewisse Mindestmengen an alkalischem Mittel notwendig, um die im Polysaccharid-Amin-Addukt salzartig gebundenen tertiären Fettamine freizusetzen. Die Mindestmengen an alkalischem Mittel liegen bei 1,8 Mol pro 1 000 g 100 %igem Biopolymer und entsprechenden, vom Trockengehalt abhängigen, höheren Mengen an noch feuchtem Preßkuchen. Zweckmäßigerweise wird das 1- bis 6-fache, bevorzugt das 1,2- bis 3,5-fache, der Mindestmenge an alkalischem Mittel eingesetzt.

Das aus dem Addukt derart erhaltene Polysaccharid solvatisiert nicht in den alkalischen alkoholischen Lösungen und fällt als leicht abtrennbarer Niederschlag an. Der nach dem Abtrennen der Flüssigkeit resultierende Filterkuchen enthält noch geringe Mengen an Alkaliionen, die durch mehrmaliges Nachwaschen mit Alkanolen, bevorzugt Methanol, größtenteils entfernt werden können. Sofern gewünscht, können Reste der Alkaliionen durch Zusatz einer geringen Menge einer geeigneten Säure zum letzten Wasch-Alkanol beseitigt bzw. in die entsprechenden, beim praktischen Einsatz vernachlässigbaren Salze übergeführt werden. Hierfür geeignete Säuren sind Mineralsäuren wie Salzsäure, Schwefelsäure oder Phosphorsäure, vorzugsweise jedoch organische Säuren wie Ameisensäure, Essigsäure, Milchsäure, Weinsäure, Äpfelsäure oder Zitronensäure. Die so erhaltenen getrockneten Endprodukte lassen sich in wäßrigen Systemen einsetzen, wobei ein pH-Wert im Bereich von etwa 5 bis 7 erhalten wird, wie es für manche Einsatzzwecke erwünscht ist.

Andererseits können aber auch beim Einsatz des Biopolymers in wäßrigen Systemen diesen Systemen geringe Mengen der obengenannten Säuren zugesetzt werden.

Das erfindungsgemäße Verfahren kann bei Zimmertemperatur oder erhöhter Temperatur durchgeführt werden. Höhere Temperaturen verkürzen einerseits die Verfahrensdauer, andererseits bedingen Temperaturen in der Nähe des Siedepunkts des Alkohols aufwendigere Apparaturen. In der Praxis wird man deshalb eine den vorhandenen Apparaturen entsprechende zweckmäßige Temperatur einstellen, die anhand einfacher Vorversuche leicht zu ermitteln ist. Zweckmäßig arbeit man in einem Bereich von etwa Zimmertemperatur bis etwa 60 °C. Zur Vermeidung von Lösemittelverlusten empfiehlt es sich, nach Umsetzungen bei erhöhter Temperatur die Ansätze vor der Abscheidung des Festkörpers abzukühlen, zweckmäßig auf Raumtemperatur.

Da im heterogenen System gearbeitet wird, werden zweckmäßig Apparaturen eingesetzt, die eine Rühr-, Schneid-, Knet-, Scher- oder Mahlwirkung auf den Feststoff ausüben können.

Die mikrobiellen Polysaccharide fallen in einer leicht abtrennbaren Form an und liegen nach dem Trocknen weitgehend in der freien Säureform vor. Die Produkte zeichnen sich durch sehr günstige Viskositätseigenschaften aus.

Das aus Alkohol, dem abgespaltenen tertiären Amin und etwas alkalischem Mittel bestehende Filtrat läßt sich leicht destillativ aufarbeiten. Das aus dem Addukt abgespaltene Amin kann unmittelbar wieder zur Abtrennung mikrobieller Polysaccharide aus ihren Fermentationslösungen eingesetzt werden. Der vorher übergehende Alkohol kann, gegebenenfalls nach Entwässerung, wieder in den Prozeß zurückgeführt werden.

Eine vollkontinuierliche Ausgestaltung des Verfahrens ist möglich.

Zunächst wird die Herstellung eines Addukts aus Xanthan und einem tertiären Fettalkylamin beschrieben (DE-A-3 230 303).

Als Produktionsstamm diente Xanthomonas campestris NRRL B-1459. Zur Vorkultur wurde eine Agarkultur in ein Glucose-Pepton-Medium überimpft und darin im Schüttelkolben bei 30 °C bebrütet. Diese Kultur diente als Inoculum (3 %) für einen 10 Liter-Fermenter, dessen Nährmedium 3-5 % Glucose oder Saccharose, 0,15-0,25 % Cornsteep (Maisquellwasser), 0,1 bis 0,2 % Natriumnitrat, 0,1 % Dikaliumphosphat und 0,05 % Magnesiumsulfat-Hydrat enthielt. Der beimpfte Fermenter wurde auf 28 °C gehalten und unter Rühren (400 U/min) mit 10 l Luft/min belüftet. Nach etwa 36 Stunden enthielt das Fermentationsmedium 18-20 g Xanthan pro Liter.

In 1 000 g einer Xanthanlösung mit einem Polysaccharidgehalt von 1,8 % wurden 7 g Cocosfettalkyldimethylamin (C-Kettenverteilung im Cocosfettalkylrest : etwa 2 % $C_{10}$, 58 %, $C_{12}$, 22 % $C_{14}$, 11 % $C_{16}$, 7 % $C_{18}$) eingerührt. Nach Zugabe von 50 g 2 N Essigsäure gerann die erhaltene Dispersion und das Addukt schied sich in Form von zunächst stark gequollenen Fladen ad, die aber beim Nachrühren rasch desolvatisierten. Das Addukt wurde abgesaugt, mit entionisiertem Wasser nachgewaschen und durch Abpressen weitgehend entwässert. Es wurden 101,7 g Xanthan-Amin-Addukt in Form eines feuchten Preßkuchens erhalten, der 17,7 % Xanthan und 6,2 % Amin enthielt.

## Beispiele 1 bis 8 (Allgemeine Verfahrensweise) :

Zu 80 g des Xanthan-Amin-Addukts, das 19,1 g Festkörper, davon 14,1 g Xanthan und 5,0 g Amin (0,021 Mol) enthielten, wurden m Gramm Alkanol (M = Methanol, E = Ethanol, I = Isopropanol) gegeben, dem vorher n Gramm einer p-%igen wäßrigen Losung eines Alkalihydroxids zugesetzt wurden. Mit Hilfe

eines schnell rotierenden Schneidpropellerrührers wurde das Xanthan-Amin-Addukt innerhalb von 10 Minuten im Alkohol verteilt. Dabei stieg die Temperatur von etwa 25 °C bis auf etwa 60 °C an. Es wurde auf 25 °C abgekühlt, das in Form von kurzen Fasern freigesetzte Xanthan abgesaugt und zweimal mit je m/2 Gramm Alkohol von Raumtemperatur nachgewaschen. Der Filterkuchen wurde getrocknet und zerkleinert. Es wurden q Gramm Xanthan erhalten, das sich in entionisiertem Wasser vollkommen löste. Die verwendeten Alkohole konnten durch Abdestillieren über eine Kolonne leicht wiedergewonnen werden, desgleichen das verwendete Amin.

Die variablen Versuchsbedingungen der Beispiele 1 bis 8 sind in der folgenden Tabelle zusammengefaßt :

(Siehe Tabelle Seite 5 f.)

| Beispiel Nummer | Alkohol-Art | Menge (m g) | Alkali-hydroxid-Art | Gehalt in $H_2O$ (p %) | Menge an wäßriger Lösung (n g) | Mole Alkalihydroxid | Ausbeute an Xanthan (q g) |
|---|---|---|---|---|---|---|---|
| 1 | M | 240 | NaOH | 33 | 9,25 | 0,077 | 12,6 |
| 2 | M | 360 | NaOH | 33 | 9,25 | 0,077 | 12,7 |
| 3 | M | 240 | KOH | 50 | 8,60 | 0,077 | 12,4 |
| 4 | E | 240 | KOH | 50 | 8,60 | 0,077 | 12,9 |
| 5 | I | 240 | NaOH | 33 | 4,65 | 0,038 | 13,1 |
| 6 | I | 240 | NaOH | 33 | 9,25 | 0,077 | 14,0 |
| 7 | I | 360 | NaOH | 33 | 4,65 | 0,038 | 13,2 |
| 8 | I | 240 | KOH | 50 | 8,60 | 0,077 | 14,0 |

Beispiel 9

Es wurde wie beim Beispiel 1 verfahren, aber als Alkali-hydroxid-Lösung eine Lösung von 3,2 g Lithiumhydroxid-Hydrat ($LiOH + H_2O$) in 240 g Methanol verwendet. Es resultierten 11,7 g Xanthan.

Beispiel 10

Es wurde wie beim Beispiel 4 verfahren, aber eine Mischung von 116 g Ethanol und 128 g einer 0,5 N Lösung von Kaliumhydroxid in Ethanol eingesetzt. Es resultierten 13,2 g Xanthan.

Beispiel 11

Es wurde wie beim Beispiel 1 gearbeitet, jedoch eine Mischung von 240 g Methanol und 13,9 g einer 30 %igen Lösung von Natriummethylat in Methanol eingesetzt. Die Ausbeute an Xanthan betrug 12,9 g.

Beispiel 12

Es wurde analog Beispiel 1 vorgegangen, jedoch beim zweiten Nachwaschen den 120 g Methanol 0,6 g Milchsäure zugesetzt. Dadurch resultierte beim Auflösen des Xanthans in Wasser ein pH-Wert von nur 5 gegenüber 8 ohne Milchsäure-Zusatz. Die Ausbeute an Xanthan betrug 12,6 g.

**Patentansprüche**

1. Verfahren zur Isolierung von mikrobiellen Polysacchariden aus ihren Addukten mit langkettigen Aminen durch Behandeln mit einwertigen Alkanolen mit 1 bis 3 Kohlenstoffatomen und darin gelösten basischen Derivaten der Alkalimetalle, dadurch gekennzeichnet, daß ein Addukt eines tertiären Amins mit einem langkettigen und zwei kurzkettigen aliphatischen Resten eingesetzt wird.

2. Verfahren nach Anspruch 1, dadurch gekennzeichnet, daß Amin-Addukt in Form eines feuchten Preßkuchens eingesetzt wird.

3. Verfahren nach Anspruch 2, dadurch gekennzeichnet, daß der Preßkuchen 10 bis 40 Gew.-% Feststoffgehalt hat.

4. Verfahren nach Anspruch 2 und 3, dadurch gekennzeichnet, daß der Preßkuchen 15 bis 30 Gew.-% Feststoffgehalt hat.

5. Verfahren nach einem oder mehreren der vorhergehenden Ansprüche, dadurch gekennzeichnet, daß das tertiäre Amin im Addukt der allgemeinen Formel

$$NR^1R^2R^3$$

entspricht, in der $R^1$ Alkyl mit 10 bis 20 Kohlenstoffatomen und $R^2$ und $R^3$, die gleich oder verschieden sind, Methyl oder Ethyl bedeuten.

6. Verfahren nach einem oder mehreren der vorhergehenden Ansprüche, dadurch gekennzeichnet, daß das Alkanol Methanol ist.

7. Verfahren nach einem oder mehreren der vorhergehenden Ansprüche, dadurch gekennzeichnet, daß das basische Derivat ein Hydroxid oder Alkoholat des Lithiums, Kaliums oder Natriums ist.

8. Verfahren nach Anspruch 7, dadurch gekennzeichnet, daß das Alkoholat als Lösung im entsprechenden Alkanol und das Hydroxid fest, als alkoholische Lösung oder als konzentrierte wäßrige Lösung eingesetzt werden.

9. Verfahren nach einem oder mehreren der vorhergehenden Ansprüche, dadurch gekennzeichnet, daß 8 bis 80, vorzugsweise 12 bis 40, Gew.-Teile Alkanol pro Gew.-Teil Addukt eingesetzt werden.

10. Verfahren nach einem oder mehreren der vorhergehenden Ansprüche, dadurch gekennzeichnet, daß 2 bis 30, vorzugsweise 3 bis 10, Gew.-Teile Alkanol pro Gew.-Teil Addukt-Preßkuchen eingesetzt werden.

**Claims**

1. Process for isolating microbial polysaccharides from adducts thereof with long-chain amines by treating these adducts with monohydric alkanols having 1 to 3 carbon atoms and with basic derivatives of alkali metals dissolved therein, which comprises using an adduct of a tertiary amine having one long-chain and two short-chain aliphatic radicals.

2. The process as claimed in claim 1, which comprises using the amine adduct in the form of a humid press cake.

3. The process as claimed in claim 2, wherein the press cake has a solids content of 10 to 40 % by weight.

4. The process as claimed in claims 2 and 3, wherein the press cake has a solids content of 15 to 30 % by wheight.

5. The process as claimed in one or more of the preceding claims, wherein the tertiary amine contained in the adduct corresponds to the general formula

$$NR^1R^2R^3$$

wherein $R^1$ is an alkyl having 10 to 20 carbon atoms and $R^2$ and $R^3$, which are the same or different from one another, are methyl or ethyl.

6. The process as claimed in one or more of the preceding claims, wherein the alkanol is methanol.

7. The process as claimed in one or more of the preceding claims, wherein the basic derivative is a hydroxide or an alcoholate of lithium, potassium or sodium.

8. The process as claimed in claim 7, which comprises using the alcoholate as a solution in the corresponding alkanol and the hydroxide in the solid state, as an alcoholic solution or as a concentrated aqueous solution.

9. The process as claimed in one or more of the preceding claims, which comprises using from 8 to 80, preferably 12 to 40, parts by weight of alkanol per part by weight of adduct.

10. The process as claimed in one or more of the preceding claims, which comprises using from 2 to 30, preferably 3 to 10, parts by weight of alkanol per part by weight of adduct press cake.

**Revendications**

1. Procédé pour l'isolement de polysaccharides microbiens à partir de leurs produits d'additions avec des amines à longue chaîne, par traitement avec des alcanols monovalents ayant de 1 à 3 atomes de carbone et des dérivés basiques des métaux alcalins, dissous dans les alcanols, caractérisé en ce qu'on utilise un produit d'addition d'une amine tertiaire ayant un radical aliphatique à longue chaîne et deux radicaux aliphatiques à courte chaîne.

2. Procédé selon la revendication 1, caractérisé en ce que le produit d'addition avec une amine se présente sous forme d'un gâteau de presse humide.

3. Procédé selon la revendication 2, caractérisé en ce que le gâteau de presse a une teneur en substances solides de 10 à 40 % en poids.

4. Procédé selon l'une des revendications 2 et 3, caractérisé en ce que le gâteau de presse a une teneur en substances solides de 15 à 30 % en poids.

5. Procédé selon une ou plusieurs des revendications précédentes, caractérisé en ce que l'amine tertiaire dans le produit d'addition répond à la formule générale :

$$NR^1R^2R^3$$

dans laquelle $R^1$ représente un groupe alkyle ayant de 10 à 20 atomes de carbone, et $R^2$ et $R^3$, qui sont identiques ou différents, représentent des groupes méthyle ou éthyle.

6. Procédé selon une ou plusieurs des revendications précédentes, caractérisé en ce que l'alcanol est le méthanol.

7. Procédé selon une ou plusieurs des revendications précédentes, caractérisé en ce que le dérivé basique est un hydroxyde ou un alcoolate de lithium, de potassium ou de sodium.

8. Procédé selon la revendication 7, caractérisé en ce que l'alcoolate est utilisé sous forme de solution dans l'alcanol correspondant et l'hydroxyde est utilisé sous forme solide, en solution alcoolique ou en solution aqueuse concentrée.

9. Procédé selon une ou plusieurs des revendications précédentes, caractérisé en ce qu'on utilise de 8 à 80, de préférence de 12 à 40, parties en poids d'alcanol par partie en poids de produit d'addition.

10. Procédé selon une ou plusieurs des revendications précédentes, caractérisé en ce qu'on utilise de 2 à 30, de préférence de 3 à 10 parties en poids d'alcanol par partie en poids de gâteau de presse de produit d'addition.